# EUROPEAN PATENT APPLICATION

(11) **EP 1 857 938 A1**
(43) Date of publication of application: **21.11.2007**
(21) Application number: 06712471.9
(22) Date of filing: 27.01.2006
(51) Int. Cl.: G06F 11/18

(54) **INFORMATION PROCESSING APPARATUS AND INFORMATION PROCESSING METHOD**

(30) Priority: 31.01.2005 JP 2005022945
(71) Applicant: Yokogawa Electric Corporation, Tokyo 180-8750 (JP)
(72) Inventor: TERAYAMA, Atsushi, 2-chome, Musashino-shi, Tokyo, 1808750 (JP); MANIWA, Yukio, 2-chome, Musashino-shi, Tokyo, 1808750 (JP)
(74) Representative: Grünecker, Kinkeldey, Stockmair & Schwanhäusser Anwaltssozietät
(86) International application number: PCT/JP2006/301305
(87) International publication number: WO 2006/080433

(57) **Abstract**

An asynchronous communicating part executes an asynchronous communication between a first device and a second device. A first process executing part executes a processing in the first device by use of the asynchronous communication as a trigger. A second process executing part executes a processing in the second device by use of the asynchronous communication as a trigger. A trigger signal sending part sends a trigger signal from the first device to the second device. A response signal replying part replies a response signal from the second device to the first device when the second device receives the trigger signal. Thus, the first process executing part and the second process executing part execute the processing in the first device and the second device using the asynchronous communication as the trigger, so that the processing in the first device and the processing in the second device are synchronized.

## Description

### FIELD OF THE INVENTION

The present invention relates to an information processing apparatus comprising plural devices for executing processing mutually independently and an information processing method, and particularly to an information processing apparatus capable of synchronizing and operating plural devices and an information processing method.

### BACKGROUND ART

It becomes necessary to exchange data between CPUs in the case of performing processing mutually related to plural CPUs.
JP-A-8-221290 is seen as a related art.

### DISCLOSURE OF THE INVENTION

### PROBLEMS TO BE RESOLVED BY THE INVENTION

A method using RAM (random access memory) is generally contemplated as a method for exchanging data between plural CPUs.

However, in such a method, it is necessary to prepare the RAM as hardware. Also, hardware resources such as an address bus or a data bus are required as an interface and the interface becomes complicated, so that failure factors also increase. Particularly, in the case of wanting to insulate the portion between the CPUs, an insulating element is required in the interface, and complication and cost increase are inevitable.

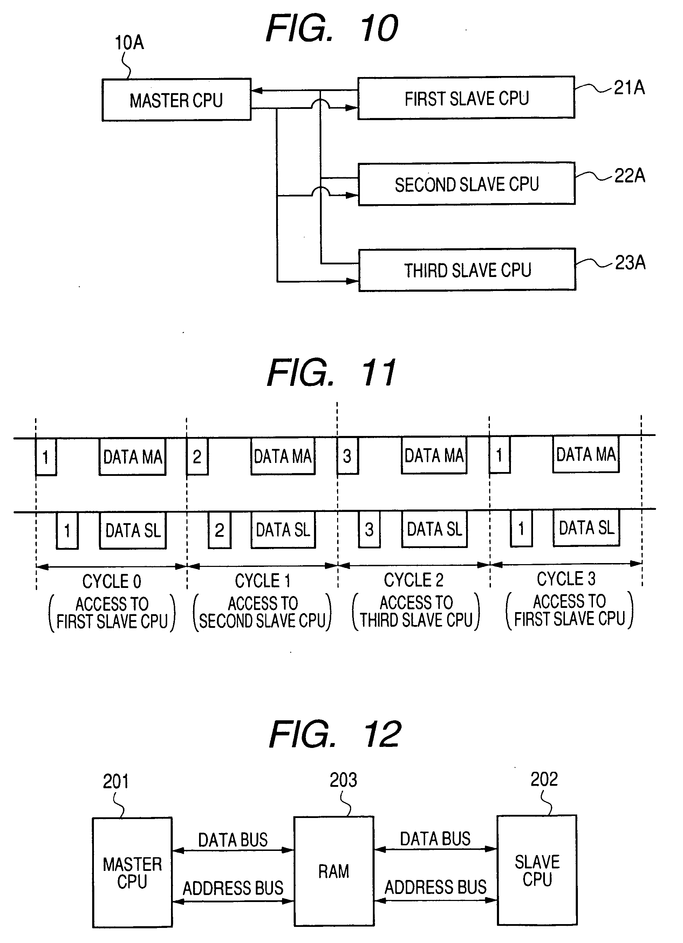

Fig. 12 shows a configuration example of the case of being configured so that a shared RAM 203 can be accessed from a master CPU 201 and a slave CPU 202. For example, in the case of using two CPUs for the purpose of duplexing of processing, information about each of the CPUs is written into the shared RAM and also information about the other CPU is read from the shared RAM. Then, it is checked whether or not the same processing is normally executed by collating the other information with my information in each of the CPUs.

However, the information about each of the CPUs is information generated by asynchronous processing in each of the CPUs, so that a time lag occurs in the collated information and a mismatch between the pieces of information caused by its time lag tends to occur. Also, it is necessary to implement an arbitration function of being accessed from the two CPUs by external hardware. Also, it is necessary to adjust timing of reading from the shared RAM 203 and writing into the shared RAM 203 in order to synchronize processing between the CPUs, so that processing overhead increases and processing performance decreases.

An object of the invention is to provide an information processing apparatus capable of synchronizing processing in plural devices without reducing a throughput, and an information processing method.

### MEANS OF SOLVING THE PROBLEMS

The invention provides an information processing apparatus comprising: a first device and a second device of which each execute a processing independently; a communicating part which executes a communication between the first device and the second device; a first process executing part which executes a processing in the first device by use of the communication as a trigger; and a second process executing part which executes a processing in the second device by use of the communication as a trigger.
According to this information processing apparatus, a first process executing part and a second process executing part execute processing in the first device and the second device using communication as a trigger, so that the processing in the first device and the second device is synchronized.

In the information processing apparatus, the communicating part may comprise: a trigger signal sending part which sends a trigger signal from the first device to the second device; and a response signal replying part which replies a response signal from the second device to the first device when the second device receives the trigger signal.
In this case, the first device may synchronize processing in the first device and the second device using a reception state etc. of the response signal.

In the information processing apparatus, the second process executing part may execute the processing in the second device by use of the reception of the trigger signal in the second device as a trigger.

In the information processing apparatus, an information for identifying a processing phase may be included in the trigger signal, and the second process executing part may execute a processing of a processing phase identified by the trigger signal after the second device receives the trigger signal.
In the information processing apparatus, the communicating part may execute an asynchronous communication.

The invention also provides an information processing apparatus comprising: a first device and a second device which send and receive a data each other and of which each executes a processing independently; a synchronizing part which synchronizes a processing in the first device and a processing in the second device by executing a communication between the first device and the second device; and a data communicating part which executes sending and receiving of the data by executing a communication between the first device and the second device after the processings are synchronized by the synchronizing part.
According to this information processing apparatus, it is unnecessary to execute processing for synchronization during sending and receiving of the data since communication is executed between the first device and the second device after processing is synchronized by the synchronizing part.

In the information processing apparatus, the synchronizing part and the data communicating part may execute a communication by use of the same communication path.

The information processing apparatus may comprise a determining part which determines whether or not the synchronization by the synchronizing part succeeds, and the data communicating part may execute sending and receiving of the data when the determining part determines that the synchronization succeeds.
In this case, sending and receiving of the data may be stopped when synchronization fails, and in that case, it can specialize in an operation of synchronization and return to a synchronized state can be made easily.
In the information processing apparatus, the synchronizing part and the data communicating part may execute an asynchronous communication.

The invention also provides an information processing apparatus comprising a first device and a second device of which executes a processing independently, and the first device comprises: a first notifying part which notifies the second device of the present processing stage of the first device; and a first monitoring part which monitors a processing timing of the second device based on a reception of the notification from the second device, and the second device comprises: a second notifying part which notifies the first device of the present processing stage of the second device; and a second monitoring part which monitors a processing timing of the first device based on the reception of the notification from the first device.
According to this information processing apparatus, the first device and the second device can respectively monitor mutual processing timing by the notifying parts and the monitoring part and both the devices can be synchronized.

In the information processing apparatus, the first monitoring part and the second monitoring part may determine whether or not a processing timing of each of the devices is normal based on a timing at which a notification indicating a predetermined processing stage is received.

In the information processing apparatus, the first device and the second device may be separate CPUs.

The invention also provides an information processing method which uses a first device and a second device of which each executes a processing independently, comprising: a step of executing a communication between the first device and the second device; a step of executing a processing in the first device by use of the communication as a trigger; and a step of executing a processing in the second device by use of the communication as a trigger.
According to this information processing method, processing in the first device and the second device is executed using communication as a trigger, so that the processing in the first device and the second device is synchronized.

In the information processing method, the step of executing the communication may comprise: a step of sending a trigger signal from the first device to the second device; and a step of replying a response signal from the second device to the first device when the second device receives the trigger signal.

In the information processing method, in the step of executing the processing in the second device, the processing in the second device may be executed by use of the reception of the trigger signal in the second device as a trigger.

In the information processing method, an information for identifying a processing phase may be included in the trigger signal, and a processing of a processing phase identified by the trigger signal may be executed after the second device receives the trigger signal in the step of the executing processing in the second device.
In the information processing method, the step of executing the communication may execute an asynchronous communication.

The invention also provides an information processing method which uses a first device and a second device which send and receive a data each other and of which each executes a processing independently, comprising: a step of synchronizing a processing in the first device and a processing in the second device by executing a communication between the first device and the second device; and a step of executing sending and receiving of the data by executing a communication between the first device and the second device after the processing is synchronized.
According to this information processing apparatus, it is unnecessary to execute processing for synchronization during sending and receiving of the data since communication is executed between the first device and the second device after processing is synchronized by the synchronizing step.

In the information processing method, in the step of synchronizing and the step of executing sending and receiving of the data, a communication may be executed by use of the same communication path.

The information processing method may comprise a step of determining whether or not the synchronization succeeds, and, in the step of executing sending and receiving of the data, the sending and receiving of the data may be executed when the determining step determines that the synchronization succeeds.
In this case, sending and receiving of the data may be stopped when synchronization fails, and in that case, it can specialize in an operation of synchronization and return to a synchronized state can be made easily.

In the information processing method, the step of synchronizing and the step of executing sending and receiving of the data may executes asynchronous communication.

### BRIEF DESCRIPTION OF THE DRAWINGS

[Fig. 1] (a) and (b) are block diagrams functionally showing an information processing apparatus according to the invention.
[Fig. 2] is a block diagram functionally showing the information processing apparatus according to the invention.
[Fig. 3] is a block diagram showing a configuration of a safety system to which the information processing apparatus of one embodiment is applied.
[Fig. 4] is a block diagram showing a configuration related to processing of synchronization between CPUs.
[Fig. 5] is a block diagram showing a configuration related to processing of data collation etc.
[Fig. 6] is a diagram showing sequence of communication processing.
[Fig. 7] (a) is a flowchart showing a processing procedure in a master CPU and (b) is a flowchart showing a processing procedure in a slave CPU.
[Fig. 8] (a) is a flowchart showing a processing procedure in the master CPU and (b) is a flowchart showing a processing procedure in the slave CPU.
[Fig. 9] (a) to (c) are diagrams showing configurations of communication frames and (a) shows configurations of individual communication frames and (b) shows an operation of the case where a communication state is normal and (c) shows an operation of the case of communication abnormality.
[Fig. 10] is a block diagram showing a configuration of sending a command from a master CPU to three slave CPUs.
[Fig. 11] is a diagram showing a configuration of communication frames of the case of sending a command to three slave CPUs.
[Fig. 12] is a block diagram showing a conventional configuration example of the case of synchronizing a master CPU and a slave CPU.

### DESCRIPTION OF THE REFERENCE NUMERALS AND SIGNS

- 101: Asynchronous Communicating part (Communication Block 13, Communication Block 23)
- 102: First Process executing part (Synchronization Processing Part 19)
- 103: Second Process executing part (Synchronization Processing Part 29)
- 105: Synchronization Part (Synchronization Processing Part 19, Synchronization Processing Part 29)
- 106: Determining part (Synchronization Processing Part 19, Synchronization Processing Part 29)
- 107: Data Communicating part (Communication Block 13, Communication Block 23)
- 108: Notifying part (Synchronization Processing Part 19)
- 109: Monitoring Part (Synchronization Processing Part 19)
- 110: Notifying part (Synchronization Processing Part 29)
- 111: Monitoring Part (Synchronization Processing Part 29)

### BEST MODE FOR CARRYING OUT THE INVENTION

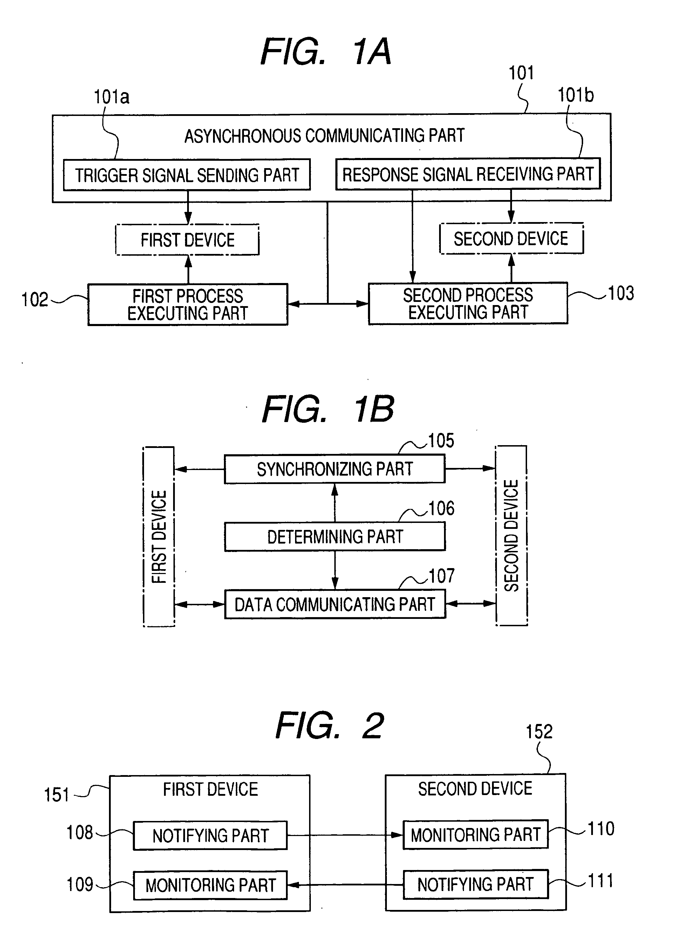

Figs. 1(a), 1(b) and 2 are block diagrams functionally showing an information processing apparatus according to the invention.

In Fig. 1(a), an asynchronous communicating part 101 executes asynchronous communication between a first device and a second device. A first process executing part 102 executes processing in the first device using the asynchronous communication as a trigger. A second process executing part 103 executes processing in the second device using the asynchronous communication as a trigger.

In Fig. 1(a), a trigger signal sending part 101 a sends a trigger signal from the first device to the second device. A response signal replying part 101b replies a response signal from the second device to the first device when the second device receives the trigger signal.

In Fig. 1(b), a synchronization part 105 synchronizes processing in the first device and processing in the second device by executing asynchronous communication between the first device and the second device. A data communicating part 106 executes sending and receiving of data by executing asynchronous communication between the first device and the second device after the processing is synchronized by the synchronization part 105.

A determining part 107 determines whether or not synchronization by the synchronization part 105 succeeds. The data communicating part 106 executes sending and receiving of data when the determining part 107 determines that the synchronization succeeds.

In Fig. 2, a first device 151 comprises a notifying part 108 for notifying a second device 152 of the present processing stage of the first device 151, and a monitoring part 109 for monitoring processing timing of the second device based on receipt of notification from the second device 152. The second device 152 comprises a notifying part 110 for notifying the first device 151 of the present processing stage of the second device 152, and a monitoring part 111 for monitoring processing timing of the first device 151 based on receipt of notification from the first device 151.

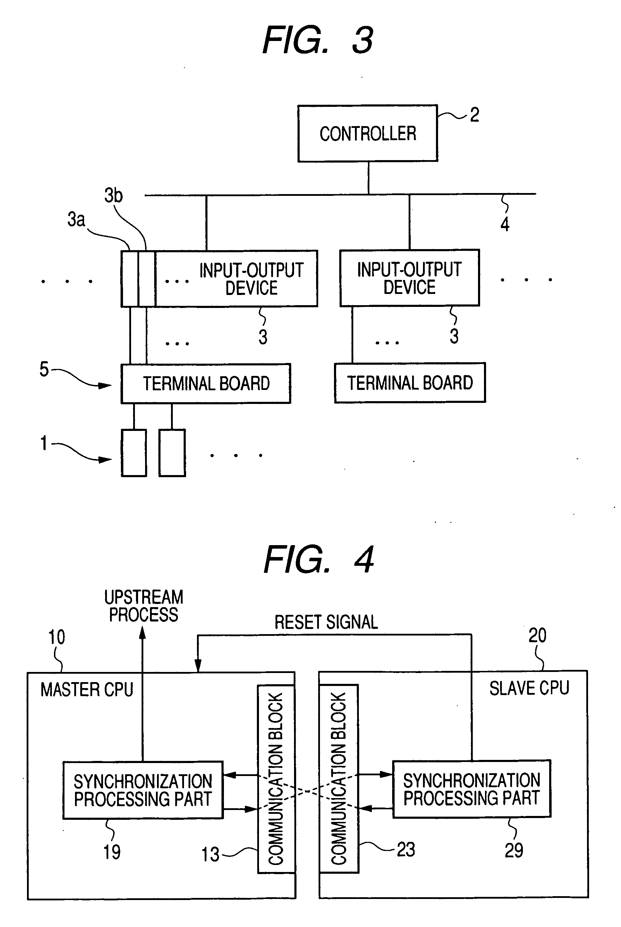

An embodiment of the information processing apparatus according to the invention will be described below with reference to Fig. 3 to Fig. 9(c).

Fig. 3 is a block diagram showing a configuration of a safety system to which the information processing apparatus of the present embodiment is applied. The safety system is a system for taking necessary measures while providing notification of an alarm when abnormality is observed in a field device in order to ensure safety of a plant. This safety system is configured as a part of the plant control system.

As shown in Fig. 3, the plant control system comprises a controller 2 for integrally managing and controlling field devices 1, 1,... such as a sensor or an electromagnetic valve arranged in each part of the plant, and input-output devices 3, 3,... interposed between the controller 2 and the field devices 1. The input-output devices 3, 3,... are connected to the controller 2 through a network 4. Also, the field devices 1, 1,... are connected to the input-output devices 3 through terminal boards 5.

As shown in Fig. 3, input-output units 3a, 3b,... for executing interface processing between the field devices 1 and the controller 2 are mounted in the input-output devices 3. As described below, in these input-output units 3a, 3b,..., the same processing is executed in a duplex manner for the purpose of improving reliability.

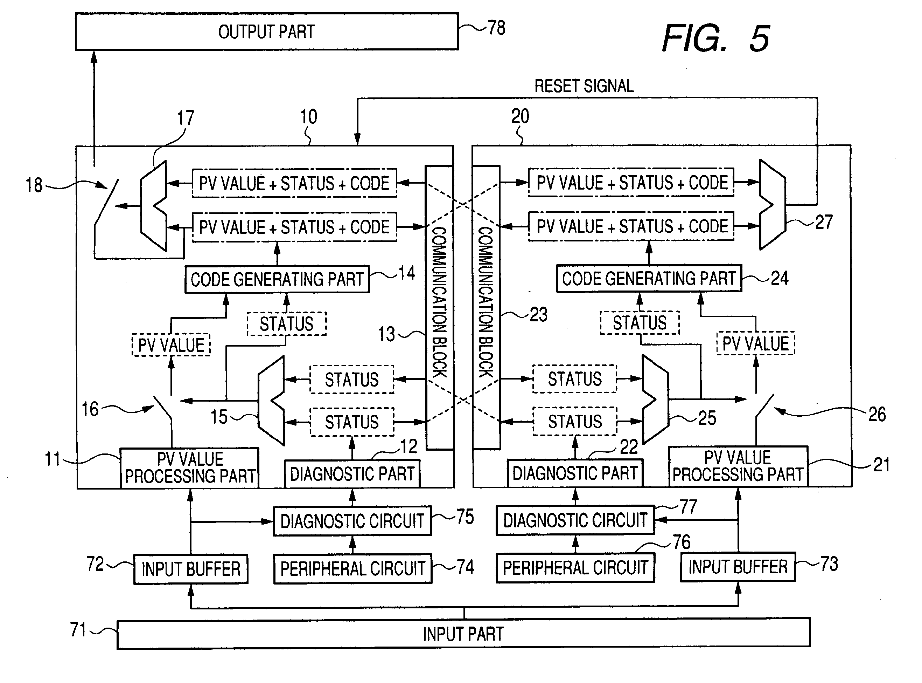

Figs. 4 and 5 are block diagrams showing a part of the configuration of the input-output unit 3a. In the embodiment, an example of a unit for processing an input value inputted from the side of the field device 1 which is a downstream process and outputting a PV value (process value) to the side of the controller 2 which is an upstream process is shown.

Fig. 4 shows a configuration related to processing of synchronization between CPUs, and Fig. 5 shows a configuration related to processing of data collation etc., respectively.

As shown in Figs. 4 and 5, the input-output unit 3a comprises a master CPU 10 and a slave CPU 20, and the respective CPU 10 and CPU 20 execute the same processing mutually independently. Also, the CPU 10 and the CPU 20 execute diagnosis of peripheral circuits mounted in the respective peripheries.

### (Configuration for synchronization processing)

As shown in Fig. 4, the master CPU 10 comprises a synchronization processing part 19 for executing processing for synchronization between the CPUs, and a communication block 13 for executing asynchronous communication (UART) with the slave CPU 20. The slave CPU 20 comprises a synchronization processing part 29 for executing processing for synchronization between the CPUs, and a communication block 23 for executing asynchronous communication (UART) with the master CPU 10.

The master CPU 10 and the slave CPU 20 execute the respective processing while obtaining synchronization by communication. A processing procedure of synchronization will be described below.

### (Configuration for other processing)

As shown in Fig. 5, an input value from the field device 1 is inputted to the master CPU 10 through an input part 71 and an input buffer 72. A peripheral circuit 74 of the periphery of the master CPU 10 is diagnosed by a diagnostic circuit 75. Also, a signal outputted from the input buffer 72 is inputted to the diagnostic circuit 75 and the presence or absence of abnormality of the signal is diagnosed. The presence or absence of abnormality of the peripheral circuit 74 and the presence or absence of abnormality of the signal outputted from the input buffer 72 are inputted to the master CPU 10 as diagnostic information from the diagnostic circuit 75.

Similarly, the same input value from the field device 1 is inputted to the slave CPU 20 through the input part 71 and an input buffer 73. A peripheral circuit 76 of the periphery of the slave CPU 20 is diagnosed by a diagnostic circuit 77. Also, a signal outputted from the input buffer 73 is inputted to the diagnostic circuit 77 and the presence or absence of abnormality of the signal is diagnosed. The presence or absence of abnormality of the peripheral circuit 76 and the presence or absence of abnormality of the signal outputted from the input buffer 73 are inputted to the slave CPU 20 as diagnostic information from the diagnostic circuit 77.

As shown in Fig. 5, the master CPU 10 comprises a PV value processing part 11 for executing arithmetic processing with respect to an input value inputted via the input buffer 72 and making conversion into a PV value (process value) of a format capable of processing in an upstream process which is the side of the controller 2, and a diagnostic part 12 for receiving diagnostic information from the diagnostic circuit 75 and executing abnormal detection and determination and generating a status which is a diagnostic result.

Also, the master CPU 10 comprises the communication block 13 for executing communication with the slave CPU 20, and a code generation part 14 for adding a CRC (Cyclic Redundancy Check) code and an update counter to a PV value and a status.

Also, the slave CPU 20 comprises a PV value processing part 21 for executing arithmetic processing with respect to an input value inputted via the input buffer 73 and making conversion into a PV value (process value) of a format capable of processing in the upstream process which is the side of the controller 2, and a diagnostic part 22 for receiving diagnostic information from the diagnostic circuit 77 and executing abnormal detection and determination and generating a status which is a diagnostic result.

Also, the slave CPU 20 comprises the communication block 23 for executing communication with the master CPU 10, and a code generation part 24 for adding a CRC (Cyclic Redundancy Check) code and an update counter to a PV value and a status.

Next, an operation of the present unit will be described.

In the master CPU 10, a status generated by the diagnostic part 12 and a status which is generated by the diagnostic part 24 of the slave CPU 20 and is acquired through communication by the communication block 23 and the communication block 13 are compared and equalized in an equalization part 15. Equalization is processing for equalizing a status handled by the master CPU 10 and a status handled by the slave CPU 20. In the equalization part 15, OR information about the statuses is generated. That is, when either status indicates abnormality in the equalization part 15, its abnormality is changed to the captured status and is passed to the code generation part 14. As described below, the statuses handled by the master CPU 10 and the slave CPU 20 are shared by performing similar processing also in the slave CPU 20.

APV value generated by the PV value processing part 11 is given to the code generation part 14. However, when abnormality of a status is detected based on processing in the equalization part 15, an input of the PV value to the code generation part 14 is broken by a breaking part 16.

In the code generation part 14, a CRC code is generated based on the status generated by the equalization part 15 and the inputted PV value. Also, every time new PV value and status are inputted, a count number is updated and a code added to a CRC code is generated. In the code generation part 14, a frame made of the PV value, the status, the CRC code and the count number is generated by adding the code generated thus to the PV value and the status. The count number is incremented every update of the PV value and the status.

A frame similar to the frame created by the code generation part 14 is similarly generated by the code generation part 24 of the slave CPU 20 and is acquired through communication by the communication block 23 and the communication block 13. The frame created by the code generation part 14 and the frame created by the code generation part 24 are collated in a comparison part 17. The comparison part 17 decides that it is abnormal when a mismatch between both the frames is detected. As described below, by performing similar processing also in the slave CPU 20, the master CPU 10 and the slave CPU 20 mutually collate the other processing result with my processing result and decide that it is abnormal when a mismatch occurs. When all the processing in the master CPU 10 and the slave CPU 20 is normal, both the frames match as a result of collation in the comparison part 17.

The frame generated by the code generation part 14 is outputted to an output part 78 which is an upstream process. However, a mismatch between both the frames is detected in the comparison part 17 and in the case of deciding that it is abnormal, an output of the frame is broken by a breaking part 18. Also, as described below, when a mismatch between the frames is detected in a comparison part 27 of the slave CPU 20, an output of the frame is broken in a fail-safe part 79.

On the other hand, in the slave CPU 20, a status generated by the diagnostic part 22 and a status which is generated by the diagnostic part 14 of the master CPU 10 and is acquired through communication by the communication block 13 and the communication block 23 are compared and equalized in an equalization part 25. In the equalization part 25, OR information about the statuses is generated. That is, when either status indicates abnormality in the equalization part 25, its abnormality is changed to the captured status and is passed to the code generation part 24.

A PV value generated by the PV value processing part 21 is given to the code generation part 24. However, when abnormality of a status is detected based on processing in the equalization part 25, an input of the PV value to the code generation part 24 is broken by a breaking part 26.

In the code generation part 24, a CRC code is generated based on the status generated by the equalization part 25 and the inputted PV value. Also, every time new PV value and status are inputted, a count number is updated and a code added to a CRC code is generated. In the code generation part 24, a frame made of the PV value, the status, the CRC code and the count number is generated by adding the code generated thus to the PV value and the status. The count number is incremented every update of the PV value and the status.

The frame created by the code generation part 24 is collated with a frame which is similarly generated by the code generation part 14 of the master CPU 10 and is acquired through communication by the communication block 13 and the communication block 23 in a comparison part 27. It is decided that it is abnormal when a mismatch between both the frames is detected in the comparison part 27.

When the mismatch between the frames is detected in the comparison part 27, a reset signal is outputted from the comparison part 27 and is given to the master CPU 10. In this case, the master CPU 10 is forcedly reset and an output of a new frame to the output part 78 is inhibited.

When the output to the output part 78 is inhibited, update of the count number is stopped, so that it can be recognized that an output of information is stopped by only referring to the count number in an upstream process of a subsequent stage after the output part 78.

### (Processing procedure of synchronization)

Next, a processing procedure of synchronization between the master CPU 10 and the slave CPU 20 will be described. As described above, in the master CPU 10 and the slave CPU 20, data is exchanged in real time and the data is collated. As a result of this, when timing of processing in both the CPUs is off, separate processing results different in a time axis direction are compared and a mismatch of collation occurs. As a result of this, it is necessary for both the CPUs to always execute the same operation in the apparatus of the embodiment. Therefore, control is performed so that a command is sent from the side of the master CPU 10 in a constant cycle using asynchronous communication (UART) and the slave CPU 20 can execute processing in the same sequence in synchronization.

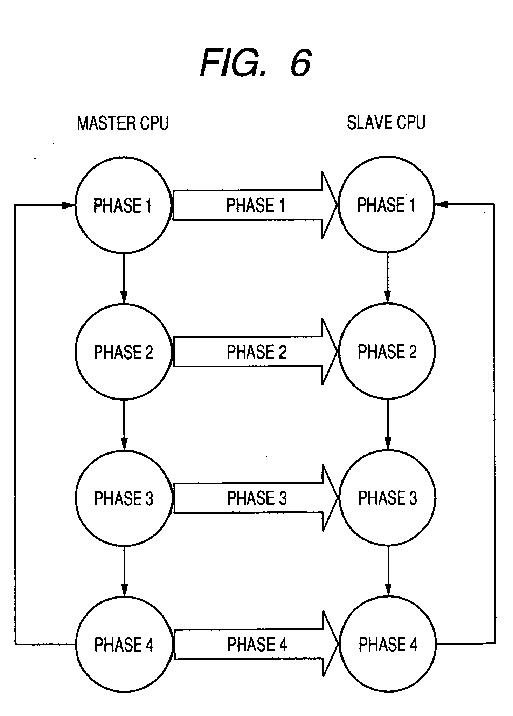

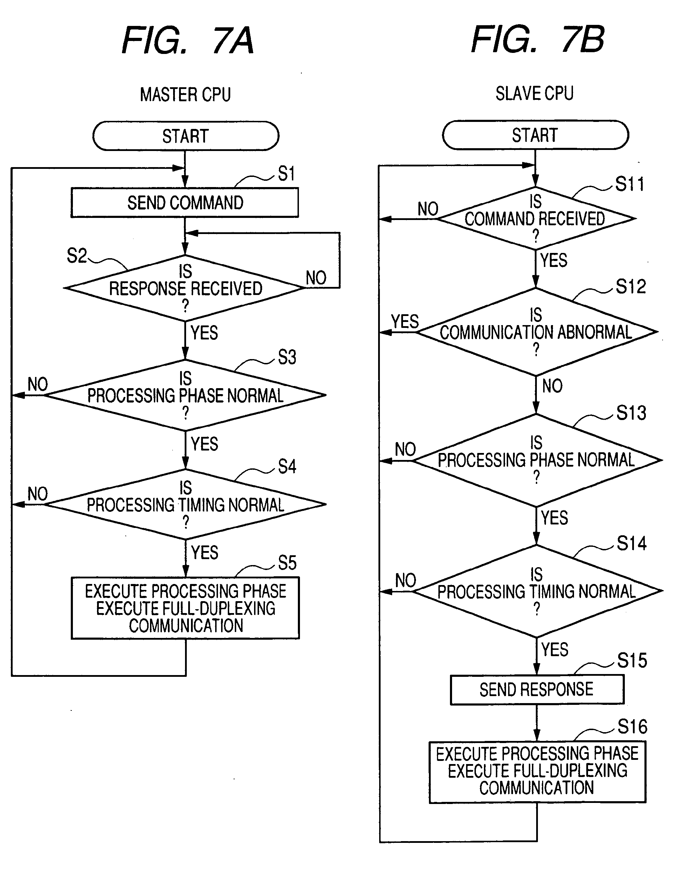

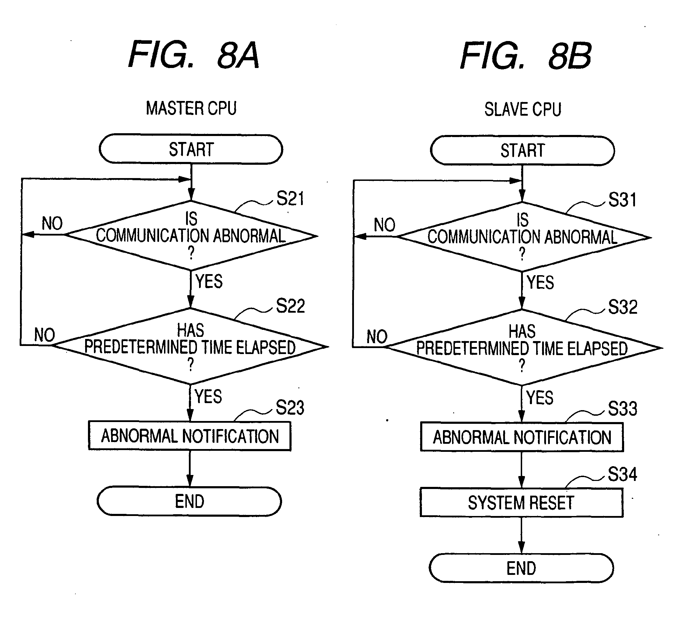

Fig. 6 is a diagram showing sequence of communication processing, and Figs. 7(a) and 8(a) are flowcharts showing processing procedures of the master CPU 10, and Figs. 7(b) and 8(b) are flowcharts showing processing procedures of the slave CPU 20.

As shown in Fig. 6, the master CPU 10 having a control right sends a command to which phase information indicating a processing phase executed by the master CPU is added to the slave CPU 20 in a constant cycle. As described below, the slave CPU 20 receiving the command executes the processing phase specified by the phase information using reception of the command as a trigger. Also, the slave CPU 20 replies a response to which the phase information included in the command is added to the master CPU 10.

Figs. 7(a) and 7(b) show procedures of synchronization processing in the master CPU 10 and the slave CPU 20. These procedures are executed based on control of the synchronization processing part 19 of the master CPU 10 and the synchronization processing part 29 of the slave CPU 20.

In the master CPU 10, a command is sent to the slave CPU 20 in step S1 of Fig. 7(a). Here, the command is sent through the communication block 13 in a constant cycle by asynchronous communication (UART). Phase information indicating a processing phase immediately executed by the master CPU is added to the command.

Next, step S2 waits a reply of response from the slave CPU 20 and when the response is replied, the flow proceeds to step S3. In step S3, a processing phase of the slave CPU 20 is monitored. That is, it is decided whether or not the phase information indicates a correct phase shown in the command by referring to the phase information included in the response. When this decision is affirmed, the flow proceeds to step S4 and when this decision is denied, the flow returns to step S1.

In step S4, processing timing of the slave CPU 20 is monitored. That is, it is decided whether or not processing in the slave CPU 20 can be executed at proper timing based on a reception interval (interval from a point in time of the previous reception to a point in time of this reception) of the responses in step S2. When the decision of step S4 is affirmed, the flow proceeds to step S5 and when the decision is denied, the flow returns to step S1.

In step S5, a predetermined processing phase (processing phase indicated by phase information about the command sent in step S1) is executed. Execution of full-duplexing communication is included in execution of the processing phase. The full-duplexing communication is processing for simultaneously conducting two-way communication between the master CPU 10 and the slave CPU 20 using asynchronous communication (UART). Processing of the full-duplexing communication in the master CPU 10 includes processing for sending the frame (frame made of a PV value, a status, a CRC code and a count number) and the status described above to the slave CPU 20 through the communication block 13 and processing for receiving the frame and the status described above sent from the slave CPU 20 through the communication block 13.

After the end of the processing phase including the full-duplexing communication, the flow returns to step S1 and processing from step S1 to step S5 is repeated with respect to the next processing phase.

On the other hand, in the slave CPU 20, step S11 of Fig. 7(b) waits reception of a command sent from the master CPU 10 and when the command is received, the flow proceeds to step S12. This command corresponds to the command sent from the master CPU 10 in step S1.

Next, it is decided whether or not communication data abnormality of the received command or communication abnormality such as parity abnormality or overrun abnormality occurs in step S12. When this decision is affirmed, the flow returns to step S11 and when this decision is denied, the flow proceeds to step S13.

In step S13, a processing phase of the master CPU 10 is monitored. That is, it is decided whether or not phase information indicates a correct phase by referring to the phase information included in the command. When this decision is affirmed, the flow proceeds to step S14 and when this decision is denied, the flow returns to step S11.

In step S 14, processing timing of the master CPU 10 is monitored. That is, it is decided whether or not processing in the master CPU 10 can be executed at proper timing based on a reception interval (interval from a point in time of the previous reception to a point in time of this reception) of the commands in step S11. When the decision of step S14 is affirmed, the flow proceeds to step S15 and when the decision is denied, the flow returns to step S11.

In step S 15, a response is replied to the master CPU 10. The response is sent through the communication block 23 by asynchronous communication (UART). Phase information about a processing phase immediately executed by the slave CPU 20, that is, a processing phase instructed by the received command is added to the response. This response corresponds to the response received in step S2.

Then, in step S16, a processing phase indicated by phase information about the command received in step S11 is executed. Execution of full-duplexing communication is included in execution of the processing phase. Processing of the full-duplexing communication in the slave CPU 20 includes processing for sending the frame (frame made of a PV value, a status, a CRC code and a count number) and the status described above to the master CPU 10 through the communication block 23 and processing for receiving the frame and the status described above sent from the master CPU 10 through the communication block 23.

After the end of the processing phase including the full-duplexing communication, the flow returns to step S11 and processing from step S11 to step S16 is repeated with respect to the next processing phase.

By the above processing procedure, the synchronization processing and the full-duplexing communication processing are repeatedly executed in processing phase units.

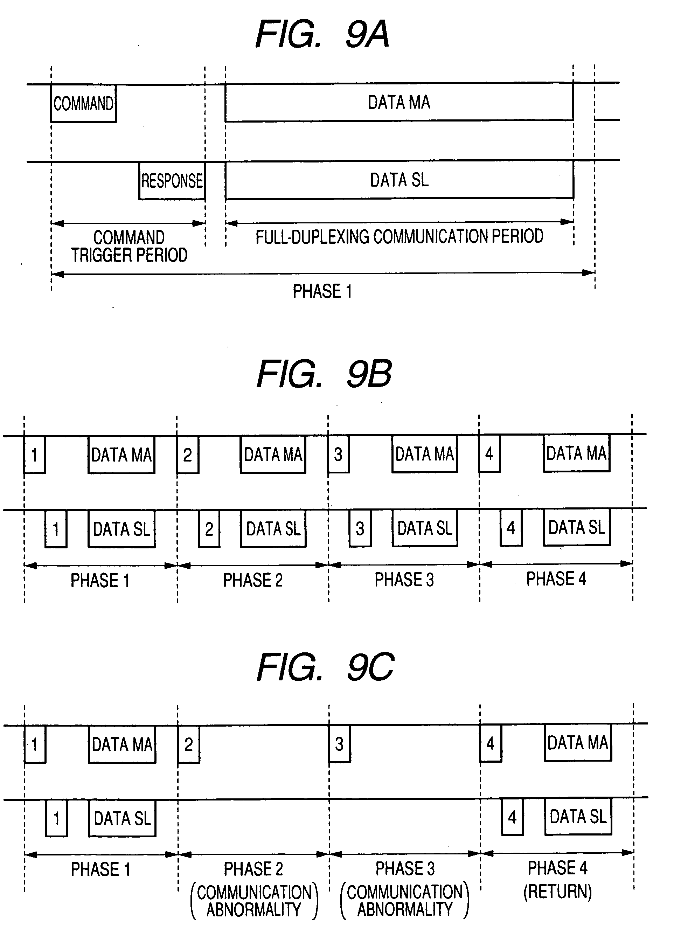

Figs. 9(a) to 9(c) are time charts showing configurations of communication frames, and Fig. 9(a) shows configurations of individual communication frames, and Fig. 9(b) shows an operation of the case where a communication state is normal, and Fig. 9(c) shows an operation of the case of communication abnormality.

For a command trigger period shown in Fig. 9(a), a series of processing from sending of a command (step S1 of Fig. 7(a)) to a reply of response (step S 15 of Fig. 7(b)) is executed. Thereafter, for a full-duplexing communication period, data MA is sent and received from the master CPU 10 and data SL is sent and received from the slave CPU 20, respectively. As described above, the data MA and the data SL include the frame (frame made of a PV value, a status, a CRC code and a count number) and the status described above, respectively.

When a communication state is normal, processing of exchange between the response and the command for synchronization disposed in processing phase units and processing of subsequent duplexing communication are alternately repeated as shown in Fig. 9(b). By sequentially repeating such phase processing, the same processing is executed in synchronization with each other in the master CPU 10 and the slave CPU 20.

When abnormality (communication abnormality) occurs in sending and receiving of the command and response, a decision of step S11, step S13 or step S14 of Fig. 7(b) is denied, or a decision of step S12 is affirmed. As a result of this, the slave CPU 20 becomes a state (step S11) of waiting the next command without executing processing of the processing phase and a reply of response. Also in this case, a decision of step S2, step S3 or step S4 of Fig. 7(a) is denied, so that the master CPU 10 also sends the next command without shifting to processing of the processing phase (step S1).

As a result of this, while communication abnormality is found as shown in Fig. 9(c), full-duplexing communication is not executed and it shifts to synchronization processing of the next processing phase. Fig. 9(c) shows the case where the communication abnormality is found in phase 2 and phase 3 and the communication state returns in phase 4.

Thus, the present embodiment is constructed so that when synchronization processing does not succeed due to communication abnormality, exchange of data by full-duplexing communication is stopped and synchronization processing of the processing phase is prepared. As a result of this, return from an abnormal state can be made easily.

Next, processing of the case where communication abnormality continues will be described.

Figs. 8(a) and 8(b) show processing procedures of the case where communication abnormality continues in synchronization processing, for example, the case where a command and a response cannot be exchanged over a predetermined number or more of processing phases.

The master CPU 10 decides whether or not it is in a state of communication abnormality in step S21. When the decision is affirmed, the flow proceeds to step S22 and when the decision is denied, the processing of step S21 is repeated. It is decided whether or not the communication abnormality continues for a predetermined time or longer in step S22. When this decision is affirmed, the flow proceeds to step S23 and when the decision is denied, the flow returns to step S21.

In step S23, an upstream process is notified of the abnormality (Fig. 4) and the processing is ended.

On the other hand, the slave CPU 20 decides whether or not it is in a state of communication abnormality in step S21. When the decision is affirmed, the flow proceeds to step S22 and when the decision is denied, the processing of step S21 is repeated. It is decided whether or not the communication abnormality continues for a predetermined time or longer in step S22. When this decision is affirmed, the flow proceeds to step S23 and when the decision is denied, the flow returns to step S21.

In step S23, an upstream process is notified of the abnormality. Then, a reset signal is outputted in step S24 (Fig. 4) and the master CPU 10 is forcedly reset. Thereafter, the processing is ended.

As described above, in the present embodiment, the master CPU and the slave CPU 20 are synchronized every processing phase, so that the same processing phase can always be executed between the two CPUs. That is, the processing phase is executed in the slave CPU 20 using reception of a command sent from the master CPU 10 in a constant cycle as a trigger, so that the slave CPU 20 can be made to execute the processing phase in the constant cycle. Also, synchronization is obtained by conducting communication using asynchronous communication (UART), so that it is unnecessary to add other hardware etc. for synchronization.

Also, the slave CPU 20 always executes a predetermined processing phase according to a command sent from the master CPU 10, so that, for example, even in the case where abnormal data is temporarily sent from the master CPU 10 or execution timing of the processing phase in the slave CPU 20 is off, return can be made speedily when a communication state becomes normal. Further, at the time of communication abnormality, it shifts to a processing state specialized in receiving of a command in the slave CPU and sending a command from the master CPU 10, so that return from an abnormal state can be made easily.

In addition, processing phases may be executed continuously before deciding the presence or absence of communication abnormality. In this case, execution may be stopped from the next processing phase when the communication abnormality is not solved.

In the present embodiment, data communication necessary for phase processing is executed in the master CPU 10 and the slave CPU 20 using sending and receiving of a command and a response for synchronization as a trigger. As a result of this, the need for processing for synchronization during the data communication is eliminated and data communication by full-duplexing communication can be conducted. Also, synchronization and data communication are arranged in a time series manner, so that the full-duplexing communication can be conducted while using a common communication path.

In the present embodiment, synchronization is executed using asynchronous communication (UART), so that it can be implemented by serial communication of only two signal lines in a hardware manner and complicated mounting is not supplied. Particularly, even for a system in which two CPUs are mutually insulated, the number of connection lines is small, so that cost is low and there is no difficulty in mounting. For example, a situation in which two CPUs are distributed to the side of a controller and the side of field devices mutually insulated in a plant control system can also be implemented easily.

In the embodiment described above, the example of executing the same processing in two CPUs has been shown, but the synchronization processing described above can similarly be applied to the case of synchronizing plural CPUs and executing separate processing. Also, synchronization can be executed with respect to two or more slave CPUs.

Fig. 10 is a block diagram showing an example of the case of synchronizing all the CPUs by sending a command from a master CPU to three slave CPUs.

In this example, as shown in Fig. 11, one slave CPU is allocated every cycle of a processing phase and data communication and synchronization processing led by a master CPU 10A are sequentially executed between the master CPU and the corresponding slave CPUs. In the example of Fig. 11, synchronization processing and data communication are respectively executed with respect to a first slave CPU 21A in cycle 0, a second slave CPU 22A in cycle 1 and a first slave CPU 23 A in cycle 2. Then, synchronization processing and data communication are again executed with respect to the first slave CPU 21A in the next cycle 3. Thus, the three slave CPUs are repeatedly accessed.

In this case, synchronization between the slave CPUs is also achieved by obtaining synchronization between the master CPU 10A and the respective slave CPUs. Therefore, the need for processing of synchronization between the slave CPUs is eliminated and synchronization between all the CPUs can be implemented easily by the minimum hardware.

Real time port-based input-output processing synchronously executed by plural CPUs can be performed by the synchronization between all the CPUs.

The scope of application of the invention is not limited to the embodiment described above. Also, the invention can be widely applied to an information processing system for handling various information as well as a safety system.

In addition, in the explanation described above, the case of implementing communication executed between the first device and the second device by asynchronous communication has been illustrated, but a form of communication is not limited to the asynchronous communication.

The present application is based on Japanese Patent Application (No.2005-022945) filed on January 31, 2005, the contents of which are incorporated herein by reference.
Fig. 1:
   - a: first device
   - b: second device
   - 101: asynchronous communicating part
   - 101a: trigger signal sending part
   - 101b: response signal receiving part
   - 102: first process executing part
   - 103: second process executing part
   - 105: synchronizing part
   - 106: determining part
   - 107: data communicating part
Fig. 2:
   - 108: notifying part
   - 109: monitoring part
   - 110: monitoring part
   - 111: notifying part
   - 151: first device
   - 152: first device
Fig. 3:
   - 2: controller
   - 3: input-output device
   - 5: terminal board
Fig. 4:
   - a: reset signal
   - b: upstream process
   - 10: master CPU
   - 20: slave CPU
   - 13: communication block
   - 19: synchronization processing part
   - 23: communication block
   - 29: synchronization processing part
Fig. 5:
   - a: PV value + status + code
   - b: status
   - c: PV value
   - d: reset signal
   - 11: PV value processing part
   - 12: diagnostic part
   - 13: communication block
   - 14: code generating part
   - 21: PV value processing part
   - 22: diagnostic part
   - 23: communication block
   - 24: code generating part
   - 71: input part
   - 72: input buffer
   - 73: input buffer
   - 74: peripheral circuit
   - 75: diagnostic circuit
   - 76: peripheral circuit
   - 77: diagnostic circuit
   - 78: output part
Fig. 6:
   - a: master CPU
   - b: slave CPU
   - c: phase 1
   - d: phase 2
   - e: phase 3
   - f: phase 4
Fig. 7:
   - a: master CPU
   - b: slave CPU
   - c: start
   - S1: send command
   - S2: Is response received?
   - S3: Is processing phase normal?
   - S4: Is processing timing normal?
   - S5: execute processing phase execute full-duplexing communication
   - S11: Is command received?
   - S12: Is communication abnormal?
   - S13: Is processing phase normal?
   - S14: Is processing timing normal?
   - S15: send response
   - S16: execute processing phase execute full-duplexing communication
Fig. 8:
   - a: master CPU
   - b: slave CPU
   - c: start
   - d: end
   - S21: Is communication abnormal?
   - S22: Has predetermined time elapsed?
   - S23: abnormal notification
   - S31: Is communication abnormal?
   - S32: Has predetermined time elapsed?
   - S33: abnormal notification
   - S34: system reset
Fig. 9:
   - a: command
   - b: response
   - c: command trigger period
   - d: data MA
   - e: data SL
   - f: full-duplexing communication period
   - g: phase 1
   - h: phase 2
   - i: phase 3
   - j: phase 4
   - k: phase 2 (communication abnormality)
   - l: phase 3 (communication abnormality)
   - m: phase 4 (return)
Fig. 10:
   - 10A: master CPU
   - 21A: first slave CPU
   - 22A: second slave CPU
   - 23A: 23A third slave CPU
Fig. 11:
   - a: data MA
   - b: data SL
   - c: cycle 0 access to first slave CPU
   - d: cycle 1 access to second slave CPU
   - e: cycle 2 access to third slave CPU
   - f: cycle 3 access to fourth slave CPU
Fig. 12:
   - a: data bus
   - b: address bus
   - 201: master CPU
   - 202: slave CPU

## Claims

1. An information processing apparatus comprising:
a first device and a second device of which each execute a processing independently;
a communicating part which executes a communication between the first device and the second device;
a first process executing part which executes a processing in the first device by use of the communication as a trigger; and
a second process executing part which executes a processing in the second device by use of the communication as a trigger.

2. An information processing apparatus according to claim 1,
wherein the communicating part comprises:
a trigger signal sending part which sends a trigger signal from the first device to the second device; and
a response signal replying part which replies a response signal from the second device to the first device when the second device receives the trigger signal.

3. An information processing apparatus according to claim 2,
wherein the second process executing part executes the processing in the second device by use of the reception of the trigger signal in the second device as a trigger.

4. An information processing apparatus according to claim 2,
wherein an information for identifying a processing phase is included in the trigger signal, and
the second process executing part executes a processing of a processing phase identified by the trigger signal after the second device receives the trigger signal.

5. An information processing apparatus according to claim 1,
wherein the communicating part executes an asynchronous communication.

6. An information processing apparatus comprising:
a first device and a second device which send and receive a data each other and of which each executes a processing independently;
a synchronizing part which synchronizes a processing in the first device and a processing in the second device by executing a communication between the first device and the second device; and
a data communicating part which executes sending and receiving of the data by executing a communication between the first device and the second device after the processings are synchronized by the synchronizing part.

7. An information processing apparatus according to claim 6,
wherein the synchronizing part and the data communicating part execute a communication by use of the same communication path.

8. An information processing apparatus according to claim 6,
which comprises a determining part which determines whether or not the synchronization by the synchronizing part succeeds,
wherein the data communicating part executes sending and receiving of the data when the determining part determines that the synchronization succeeds.

9. An information processing apparatus according to claim 6,
wherein the synchronizing part and the data communicating part execute an asynchronous communication.

10. An information processing apparatus comprising a first device and a second device of which executes a processing independently,
wherein the first device comprises:
a first notifying part which notifies the second device of the present processing stage of the first device; and
a first monitoring part which monitors a processing timing of the second device based on a reception of the notification from the second device, and
the second device comprises:
a second notifying part which notifies the first device of the present processing stage of the second device; and
a second monitoring part which monitors a processing timing of the first device based on the reception of the notification from the first device.

11. An information processing apparatus according to claim 10,
wherein the first monitoring part and the second monitoring part determine whether or not a processing timing of each of the devices is normal based on a timing at which a notification indicating a predetermined processing stage is received.

12. An information processing apparatus according to claim 1,
wherein the first device and the second device are separate CPUs.

13. An information processing method which uses a first device and a second device of which each executes a processing independently, comprising:
a step of executing a communication between the first device and the second device;
a step of executing a processing in the first device by use of the communication as a trigger; and
a step of executing a processing in the second device by use of the communication as a trigger.

14. An information processing method according to claim 13,
wherein the step of executing the communication comprises:
a step of sending a trigger signal from the first device to the second device; and
a step of replying a response signal from the second device to the first device when the second device receives the trigger signal.

15. An information processing method according to claim 14,
wherein, in the step of executing the processing in the second device, the processing in the second device is executed by use of the reception of the trigger signal in the second device as a trigger.

16. An information processing method according to claim 14,
wherein an information for identifying a processing phase is included in the trigger signal, and
a processing of a processing phase identified by the trigger signal is executed after the second device receives the trigger signal in the step of the executing processing in the second device.

17. An information processing method according to claim 13,
wherein the step of executing the communication executes an asynchronous communication.

18. An information processing method which uses a first device and a second device which send and receive a data each other and of which each executes a processing independently, comprising:
a step of synchronizing a processing in the first device and a processing in the second device by executing a communication between the first device and the second device; and
a step of executing sending and receiving of the data by executing a communication between the first device and the second device after the processing is synchronized.

19. An information processing method according to claim 18,
wherein, in the step of synchronizing and the step of executing sending and receiving of the data, a communication is executed by use of the same communication path.

20. An information processing method according to claim 18,
which comprises a step of determining whether or not the synchronization succeeds,
wherein, in the step of executing sending and receiving of the data, the sending and receiving of the data are executed when the determining step determines that the synchronization succeeds.

21. An information processing method according to claim 18,
wherein the step of synchronizing and the step of executing sending and receiving of the data execute asynchronous communication.
